# EUROPÄISCHE PATENTSCHRIFT

(11) **EP 1 022 280 B1**
(45) Veröffentlichungstag und Bekanntmachung des Hinweises auf die Patenterteilung: **02.05.2001**
(21) Anmeldenummer: 99125909.4
(22) Anmeldetag: 23.12.1999
(51) Int. Cl.: C07F 7/20

(54) **Verfahren zum Entfernen von Chlorkohlenwasserstoffen aus Organochlorsilanen**
Process for removing chlorinated hydrocarbons from organochlorosilanes
Procédé d'élimination d'hydrocarbures chlorés d'organochlorosilanes

(30) Priorität: 21.01.1999 DE 19902270
(43) Veröffentlichungstag der Anmeldung: 26.07.2000
(73) Patentinhaber: Wacker-Chemie GmbH, 81737 München (DE)
(72) Erfinder: Schinabeck, Anton, 84489 Burghausen (DE); Mautner, Konrad, Dr., 01612 Nünchritz (DE)
(74) Vertreter: Fritz, Helmut, Dr.

(56) Entgegenhaltungen:
- US-A- 5 777 145

## Beschreibung

Die Erfindung betrifft ein Verfahren zur Spaltung von Chlorkohlenwasserstoffen, welche als Verunreinigung in Organochlorsilanen vorliegen.

Chlorkohlenwassertoffe entstehen als Nebenbestandteile der Organochlorsilansynthese nach Müller-Rochow. Bei der destillativen Trennung der Organochlorsilane werden die Chlorkohlenwasserstoffe entsprechend ihrem Siedebereich in den verschiedenen Silanfraktionen auftauchen. Chlorkohlenwasserstoffe führen zu einer Reihe von Nachteilen, besonders während und nach der Verarbeitung von Organochlorsilanen zu Folgeprodukten.

Deshalb wurden Verfahren entwickelt, die Chlorkohlenwasserstoffe aus Organochlorsilanen abzutrennen. US-A-4,127,598 beschreibt ein Verfahren, bei dem Chlorkohlenwasserstoffe an Aktivkohle oder Molekularsieben adsorbiert werden. Die Reduktion der Chlorkohlenwasserstoffe zu den entsprechenden Alkanen mit Wasserstoff-haltigen Silanen an Aluminiumoxid ist in US-A-4,774,347 bzw. an Aluminiumoxid-Zirkoniumoxid-Cogelen ist in US-A-5,777,145 beschrieben. Die Alkane stören wegen der geringen Reaktivität nicht und lassen sich destillativ wegen des geänderten Siedepunkts meist einfach abtrennen.

Gegenstand der Erfindung ist ein Verfahren zur Spaltung von Chlorkohlenwasserstoffen, welche als Verunreinigung in Organochlorsilanen vorliegen, bei dem die Chlorkohlenwasserstoffe an Stahloberflächen, welche Nickel als Legierungsbestandteil enthalten, in Kontakt gebracht und in Olefine und Chlorwasserstoff gespalten werden.

Die Organochlorsilane weisen die allgemeine Formel 1

RₐSiCl₄₋ₐ, (1),

auf, in der
- **R**: gleiche oder verschiedene Substituenten, die ausgewählt werden aus Wasserstoff, linearen oder verzweigten Alkylresten mit 1 bis 6 C-Atome oder Arylresten mit 6 bis 9 C-Atomen und
- **a**: die Werte 0, 1, 2, 3 oder 4 bedeuten.

Bei den bevorzugten Organochlorsilanen der allgemeinen Formel 1 ist **R** ein Methyl- oder Phenylrest.

Bei der Herstellung der Organochlorsilane entstehen als Nebenprodukte u.a. Chlorkohlenwasserstoffe, die insbesondere die allgemeine Formel R'-Cl aufweisen, in der **R'** einen Alkylrest oder Alkarylrest mit 3 bis 20 C-Atomen bedeutet. Die bevorzugten Reste **R'** sind lineare oder verzweigte Alkylreste mit 4 bis 7 Kohlenstoffatome wie z.B. iso-Butyl, iso-Pentyl, iso-Hexyl, 2,3-Dimethylbut-2-yl, 3-Methylpent-2-yl, 2,3,3-Trimethylbut-2-yl. Der Anteil an Chlorkohlenwasserstoffen in den Organochlorsilangemischen liegt üblicherweise bei 1 ppm bis zu 5000 ppm.

Die Chlorkohlenwasserstoffe eliminieren an den katalytisch wirkenden Stahloberflächen Chlorwasserstoff und werden zu Olefinen umgewandelt. Vorzugsweise weisen die Stähle in einer ersten Ausführungsform mindestens 4 Gew.-% Nickel, insbesondere 5 - 70 Gew.-%, einen Chromgehalt von mindestens 10 Gew.-%, insbesondere mindestens 16 Gew.-% und 0 bis 20 Gew.-% Molybdän, bevorzugt 2 bis 7 Gew.-% oder 13 - 16 Gew.-%, auf. In einer zweiten Ausführungsform weisen die Stähle einen Nickelgehalt von mindestens 50 Gew.-%, insbesondere mindestens 65 Gew.-%, und einen Molybdängehalt von mindestens 20 Gew.-%, insbesondere 25 bis 35 Gew.-% auf. Bevorzugt sind Stähle, die einen Chromgehalt von mindestens 10 Gew.-%, insbesondere mindestens 16 Gew.-% und mindestens 5 Gew.-%, insbesondere mindestens 5 bis 31 Gew.-% Nickel aufweisen.

Edelstähle sind bevorzugt. Als Edelstähle können eingesetzt werden Chrom-, Nickel- und gegebenenfalls Molybdän-haltige Stähle (ChroStähle), z.B. standardaustenitische Stähle mit 18% Cr und 10% Ni bzw. 17% Cr, 12% Ni und 2% Mo, Duplex-Stähle mit 22% Cr, 5% Ni und 3% Mo bzw. 25% Cr, 7% Ni und 4% Mo und spezialaustenitische Stähle mit 20 - 33% Cr, 18 - 31% Ni und 2 - 7 % Mo, wie sie z.B. in Heinke, G.; Korkhaus, J.; Chemie Ingenieur Technik 69, 283 - 290 beschrieben werden. Es können aber auch Edelstähle der Ni-Cr-Mo-Legierung eingesetzt werden, wie sie in Agarwal, D.C.; Herda, W.R.; Materials and Corrosion, 48, 542 - 548 (1997) beschrieben werden.
Es können neben Eisen und den genannten Legierungsbestandteilen noch weitere Elemente einlegiert werden, z.B. Titan, Kupfer, Niob. Bevorzugt werden austenitische Stähle und Duplexstähle.

Beispiele für die angegebenen Edelstähle sind Werkstoffe mit der Werkstoffnummer 1.4571, 1.4404 und SS316 (17% Cr, 12% Ni, 2% jeweils unterschiedliche Zulegierung) oder Hastelloy B2 (72% Ni, 28% Cr).

Die Spaltung der Chlorkohlenwasserstoffe nimmt bei steigender Temperatur mit zunehmender Geschwindigkeit zu. Sie wird vorzugsweise bei 0°C bis 150°C, insbesondere 70 bis 110 °C durchgeführt. Die Verweilzeit kann 1 Minute bis 10 h betragen, günstigerweise beträgt sie 1 bis 5 h. Der Druck liegt günstigerweise bei 1 bis 2 bar, aber auch niedrigere oder höhere Drücke sind möglich.

Die Stahloberflächen können in geeigneter Geometrie, z.B. Netzen, in separaten Reaktoren angeboten werden. Es kann sich aber auch um Stahleinbauten mit genügender Oberfläche in Apparaten, wie z.B. Destillationskolonnen und Rührwerken, oder Rohrleitungen handeln. Bevorzugt handelt es sich dabei um Kolonneneinbauten, wie z.B. Böden oder Bodenteile wie Ventile, Füllkörper oder Packungen.

Die Spaltraten der Chlorkohlenwasserstoffe liegen typischerweise über 90 %. Die entstandenen Olefine können dann destillativ entfernt werden, da die Siedepunkte der Olefine und des korrespondierenden Chlorkohlenwasserstoffs und damit auch des Chlorsilan oder Chlorsilangemisches, in dem der Chlorkohlenwasserstoff aufgrund seines Siedepunkts angereichert war, ausreichend weit entfernt liegen.

In den nachstehend beschriebenen Beispielen beziehen sich alle Angaben von Teilen und Prozentsätzen, falls nicht anders angegeben, auf das Gewicht. Sofern nicht anders angegeben, wurden die nachstehenden Beispiele bei einem Druck der umgebenden Atmosphäre, also etwa 1000 hPa durchgeführt.

### Beispiele:

### Beispiel 1 (Vergleichsbeispiel):

In einer Siebbodenkolonne mit 1,4 m Durchmesser und 150 Böden aus handelsüblichem, nicht legiertem HII-Stahl wurde ein Gemisch aufdestilliert, das aus 45,1 Gew.-% Methyltrichlorsilan und 54,2 Gew.-% Dimethyldichlorsilan bestand. Die Verunreinigung an Chlorkohlenwasserstoffen bestand aus 550 ppm 2-Chlor-2,3-dimethylbutan, 325 ppm 2-Chlor-2-methylpentan und 190 ppm 2-Chlor-3-methylpentan. Der Rest bestand aus gesättigten Kohlenwasserstoffen, hauptsächlich 2,2,3-Trimethylbutan. Das Kopfprodukt, Methyltrichlorsilan mit < 1 % Dimethyldichlorsilan, enthielt < 50 ppm der korrespondierenden Olefine. Im Sumpfprodukt, Dimethyldichlorsilan mit 5 % Methyldichlorsilan, wurden die Chlorkohlenwasserstoffe ausgetragen.

### Beispiel 2:

In einer Kolonne mit 1,7 m Durchmesser und 150 Ventilböden mit Edelstahlventilen aus dem Werkstoff 1.4571 wurde ein Gemisch aufdestilliert, das aus 70,9 Gew.-% Methyltrichlorsilan und 28,5 Gew.-% Dimethyldichlorsilan bestand. Die Verunreinigung an Chlorkohlenwasserstoffen bestand aus 610 ppm 2-Chlor-2,3-dimethylbutan, 347 ppm 2-Chlor-2-methylpentan und 308 ppm 2-Chlor-3-methylpentan. Der Rest bestand aus gesättigten Kohlenwasserstoffen, wiederum hauptsächlich 2,2,3-Trimethylbutan. Das Kopfprodukt, Methyltrichlorsilan mit < 1 % Dimethyldichlorsilan, enthielt 790 ppm der korrespondierenden Olefine 2,3-Dimethyl-2-buten, 2-Methyl-2-penten und 3-Methyl-2-penten. Im Sumpfprodukt, Dimethyldichlorsilan mit 5 % Methyldichlorsilan, wurden < 50 ppm Chlorkohlenwasserstoffe ausgetragen.

## Patentansprüche

1. Verfahren zur Spaltung von Chlorkohlenwasserstoffen, welche als Verunreinigung in Organochlorsilanen vorliegen, bei dem die Chlorkohlenwasserstoffe an Stahloberflächen, welche Nickel als Legierungsbestandteil enthalten, in Kontakt gebracht und in Olefine und Chlorwasserstoff gespalten werden.

2. Verfahren nach Anspruch 1, bei dem die Chlorkohlenwasserstoffe die allgemeine Formel R'-Cl aufweisen, in der R' einen Alkylrest oder Alkarylrest mit 3 bis 20 C-Atomen bedeutet.

3. Verfahren nach Anspruch 1 oder 2, bei dem die Stähle einen Nickelgehalt von mindestens 5 Gew.-% aufweisen.

4. Verfahren nach Anspruch 1 bis 3, bei dem die Stähle einen Chromgehalt von mindestens 10 Gew.-% aufweisen.

## Claims

1. Process for cleavage of chlorohydrocarbons which are present as an impurity in organochlorosilanes, in which the chlorohydrocarbons are brought into contact with steel surfaces which comprise nickel as an alloying constituent and are cleaved into olefins and hydrogen chloride.

2. Process according to Claim 1, in which the chlorohydrocarbons have the general formula R'-Cl, in which R' is an alkyl radical or alkaryl radical having 3 to 20 C atoms.

3. Process according to Claim 1 or 2, in which the steels have a nickel content of at least 5% by weight.

4. Process according to Claims 1 to 3, in which the steels have a chromium content of at least 10% by weight.

## Revendications

1. Procédé de clivage d'hydrocarbures chlorés qui sont présents en tant qu'impureté dans des organochlorosilanes, dans lequel les hydrocarbures chlorés sont amenés au contact de surfaces en acier comprenant du nickel en tant que constituant d'alliage et sont clivés en oléfines et chlorure d'hydrogène.

2. Procédé selon la revendication 1, dans lequel les hydrocarbures chlorés sont de formule générale R'-Cl dans laquelle R' représente un radical alkyle ou un radical alkaryle ayant de 3 à. 20 atomes de carbone.

3. Procédé selon la revendication 1 ou 2, dans lequel les aciers présentent une teneur en nickel d'au moins 5% en poids.

4. Procédé selon les revendications 1 à 3, dans lequel les aciers présentent une teneur en chrome d'au moins 10% en poids.
